# EUROPEAN PATENT APPLICATION

(11) **EP 1 790 320 A1**
(43) Date of publication of application: **30.05.2007**
(21) Application number: 05770809.1
(22) Date of filing: 11.08.2005
(51) Int. Cl.: A61G 5/04, B60L 11/18

(54) **MOTORIZED WHEELCHAIR**

(30) Priority: 18.08.2004 JP 2004238150; 26.04.2005 JP 2005127949
(71) Applicant: Kurimoto, Ltd., Osaka-shi, Osaka 5500014 (JP)
(72) Inventor: YAMAMURO, Shigeki, c/o Kurimoto, Ltd., Osaka-shi, Osaka 5500014 (JP); HASHIMOTO, Masaru, c/o Kurimoto, Ltd., Osaka-shi, Osaka 5500014 (JP); KATO, Shiro, c/o KRI Inc. Kyoto Researh Park, Kyoto-shi, Kyoto 6008813 (JP); KURIYAMA, Kazuya, Ogaki-shi, Gifu (JP)
(74) Representative: Grünecker, Kinkeldey, Stockmair & Schwanhäusser Anwaltssozietät
(86) International application number: PCT/JP2005/014732
(87) International publication number: WO 2006/019030

(57) **Abstract**

A wheelchair T is driven by hybrid control of a fuel cell 3 and a rechargeable battery 5.

The wheelchair is driven by a motor M to which electric power is supplied from the fuel cell 3 and the rechargeable battery 5. Electric power is supplied to the motor by hydraulic control based on load fluctuations corresponding to the travel conditions of the wheelchair T. The electric energy generated by the fuel cell 3 is kept at a constant level, and the energy of the lithium-ion battery 5 is additionally used when a high load is applied to the motor such as when the wheelchair is ascending a slope. When excess energy is generated by the fuel cell 3, the lithium-ion battery 5 is charged with the excess energy, thereby minimizing the possibility of exhaustion of the lithium-ion battery 5 so that the wheelchair can travel a long distance. By using a rechargeable battery that is resistant to load fluctuations, the wheelchair can be driven smoothly. By keeping the output of the fuel cell to a constant level, it is possible to prolong its life span. By charging the rechargeable battery with constant electric energy, the load on the rechargeable battery during charging is small, so that the life span of the rechargeable battery can be prolonged too.

## Description

### TECHNICAL FIELD

The present invention relates to a hybrid electric wheelchair (including an electric scooter for the elderly).

### BACKGROUND ART

Typical conventional self-propelled wheelchairs include a motor powered by a rechargeable battery (as disclosed in Patent document 1). Such rechargeable batteries include nickel batteries such as nickel-cadmium batteries and nickel-hydrogen batteries, and lithium-ion batteries. The travel distance (time) of such an electric wheelchair depends on the capacity of its rechargeable battery. Ordinarily, such an electric wheelchair can continuously operate up to 5 to 6 hours. Thus, it may be necessary to recharge the battery several times a day, which is troublesome. Patent document 1: JP patent publication 2003-52761A

If a large number of rechargeable batteries are mounted on such a wheelchair, it is possible to increase the chargeable capacity (electric capacity), thus prolonging the continuous travel distance of the wheelchair. But this solution increases the weight of the wheel chair, thus making handling of the wheelchair difficult, and also increases the cost of the entire wheelchair because it is necessary to use heavy-duty tires and other parts to support the large number of batteries. Also, a long time is needed for charging, which further makes handling difficult. It is troublesome to control the individual batteries, too, because their individual differences have to be controlled.

To solve this problem, a wheelchair is proposed having a brush to be connected to a power source which is adapted to be brought into contact with a conductor provided on a floor where the wheelchair is parked when not in use. Thus, when the wheelchair is parked on the floor so that the brush contacts the conductor, power is supplied to the rechargeable batteries mounted on the wheelchair through the conductor and the brush (Patent document 1).

### DISCLOSURE OF THE INVENTION

### OBJECT OF THE INVENTION

The electric wheelchair disclosed in Patent document 1 is advantageous in that its batteries are rechargeable while not in use such as during nighttime. But because its power source consists only of rechargeable batteries, in order to increase the travel distance between charges, it is necessary to increase the number of rechargeable batteries mounted on the wheelchair, which is a solution not achievable without increasing the weight of the entire wheelchair.
It is proposed to mount a fuel cell on a wheelchair. A fuel cell is friendly to the environment. When the hydrogen in the cylinder runs out, it can be easily replaced with a new one. Such hydrogen cylinders are also relatively lightweight.

But in order for such a wheelchair to be able to e.g. ascend a slope, a large horsepower fuel cell is needed such as one having an output of 1 kW, with the rated output of 500 W. Such a fuel cell is large in size and cannot be mounted in some wheelchairs. A wheelchair carrying such a large fuel cell cannot travel through narrow areas.

An object of the present invention is to provide an electric wheelchair which is lightweight and can travel a long distance.

### MEANS TO ACHIEVE THE OBJECT

In order to achieve this object, the present invention provides a wheelchair carrying both a fuel cell and a rechargeable battery and driven by hybrid control of the fuel cell and rechargeable battery.
By performing hybrid control taking into consideration the characteristics of the fuel cell and the rechargeable battery, and by selecting the smallest fuel cell and rechargeable battery that can sufficiently drive the wheelchair taking e.g. its weight into consideration, it is possible to reduce the weight of the wheelchair and increase its travel distance.

Generally speaking, a fuel cell is inferior in responsiveness to load fluctuations. Thus, the output of the rechargeable battery is changed to cope with such load fluctuations. The user can thus smoothly drive the wheelchair.
More specifically, hybrid control is performed such that while the load fluctuations are relatively small and not sharp, electric energy generated by the fuel cell is kept at a constant level, and most part of the energy for driving the wheelchair is produced by the electric energy generated by the fuel cell.
While load fluctuations are relatively small, the wheelchair can be driven smoothly by the constant energy. As used herein, "constant electric energy generated" refers to "constant output energy" which is the product of output voltage and output current.

By keeping the electric energy generated by the fuel cell at a constant level, it is possible to minimize the burden on the fuel cell and thus to prolong the life span of the fuel cell. The constant level of the electric energy generated by the fuel cell is determined to the most efficient value according to the characteristics of the fuel cell.
The constant electric energy generated by the fuel cell is used to charge the rechargeable battery. Thus, it is possible to minimize the burden on the rechargeable battery due to charging, which increases the life span of the rechargeable battery.

But even while load fluctuations are small, load fluctuations do occur. The constant energy cannot cope with such load fluctuations, thereby. Thus, for smooth travel of the wheelchair, power supplied from the rechargeable battery is changed to cope with load fluctuations.
The rechargeable battery used for this purpose does not have to be so large in capacity, so that it is possible to minimize its size.

### ADVANTAGES OF THE INVENTION

By performing hybrid control according to the travel conditions of the wheelchair, using the fuel cell and the rechargeable battery, it is possible to minimize the weight of the wheelchair and improve the travel environment

### BRIEF DESCRIPTION OF THE DRAWINGS

Fig. 1 is a schematic view of an embodiment;
Fig. 2 is a view showing hybrid control of the embodiment;
Fig. 3 is a flowchart of the hybrid control system;
Fig. 4 is a flowchart of a hybrid control system of another embodiment at startup;
Fig. 5 is a flowchart of the hybrid control system of the embodiment of Fig. 4 during normal operation;
Fig. 6 is a flowchart of the hybrid control system of the embodiment of Fig. 4 when the wheelchair is at a stop;
Fig. 7 is a flowchart of the hybrid control system of the embodiment of Fig. 4 when abnormality is detected;
Fig. 8 is a flowchart of a hybrid control system of another embodiment; and
Fig. 9 is a flowchart of a hybrid control system of still another embodiment.

### DESCRIPTION OF NUMERALS

- A:: User of the wheelchair
- T:: Wheelchair
- M:: Motor
- 1:: Wheelchair body
- 2:: Large wheel
- 3:: Fuel cell
- 4:: Hydrogen cylinder
- 5:: Lithium-ion rechargeable battery
- 6:: Hybrid system controller
- 7:: Hand-operated control panel
- 8:: Resistor for disposing of excess regenerative energy
- 10:: Control circuit for the hybrid system
- 11:: CPU
- 12:: A/D converter
- 13:: I/O port
- 14:: DC-DC converter
- 15:: Relay
- 16:: Diode

### BEST MODE FOR EMBODYING THE INVENTION

From one aspect of the invention, there is provided a hybrid electric wheelchair comprising a motor for driving the wheelchair, and a fuel cell and a rechargeable battery, wherein hybrid control is carried out to supply power to the motor from the fuel cell and rechargeable battery based on fluctuations in the load on the motor corresponding to the travel conditions of the wheel chair.

Preferably, the wheelchair is configured so that it can be driven by the rechargeable battery alone. With this arrangement, because there is no need to fully drive the fuel cell at startup, it is possible to prolong the life span of the fuel cell. It is also possible to add the electric energy generated by the fuel cell so that the wheelchair can be driven by the power of the rechargeable battery.

If the wheelchair is configured such that it can be driven by the rechargeable battery alone, a switch is preferably provided which can be switched to a position in which the wheelchair is driven by the rechargeable battery alone. While the fuel cell is being activated, its accessories are also activated. Thus, noise is produced from e.g. an air blower and solenoid valves, which could trouble the wheelchair user as well as people nearby in a space where quietness is required such as in hospitals and meeting rooms.
In such a case, it is possible to deactivate the noise-producing accessories (thereby killing noise) by changing the switch to the position in which the wheelchair is driven by the rechargeable battery alone. Thus, the wheelchair user can use the wheelchair with a peace of mind at any place.

Also, it is possible to perform hybrid control in which the electric energy generated by the fuel cell is kept at a constant level, and the power supplied from the rechargeable battery is used to cope with any load fluctuation.
At this time, by charging the rechargeable battery using excess electric energy generated by the fuel cell, it is possible to charge the rechargeable battery whenever there is excess energy generated by the fuel cell such as when the wheelchair is at a stop. Since the rechargeable battery is also charged while the wheelchair is traveling, it is possible to minimize the possibility of exhaustion of the rechargeable battery. The wheelchair can thus travel a long distance.

The (constant) electric energy generated by the fuel cell is determined to an optimum value (high output at low load) according to the specifications of the fuel cell.
In view of the required charge rate (%) of the rechargeable battery, while the wheelchair is traveling normally, it can be driven by the electric energy generated by the fuel cell. The energy generated by the fuel cell is determined such that the total energy used for one-time travel of the wheelchair, including the energy used to charge the rechargeable battery, is generated by the fuel cell, by actually driving the wheelchair or by experiments.

At this time, it is possible to travel normally by driving the motor with only the electric energy generated by the fuel cell. On a flat road, load fluctuations are minimum, so that the wheelchair can travel sufficiently smoothly with a constant energy. While loads are fluctuating such as while the wheelchair is ascending a slope, the load is high, so that only the electric energy generated by the fuel cell cannot cope with such a high load. Thus, in such a case, the energy of the rechargeable battery is also used.
With this arrangement, it is possible to reduce the burden on the rechargeable battery, so that it is possible to further reduce the size of the rechargeable battery.

In this case, the electric energy generated by the fuel cell is determined such that when the wheelchair is traveling normally such as on a flat road, it can be driven by the energy generated by the fuel cell alone, and the total energy used for one-time travel of the wheelchair, including the energy used to charge the rechargeable battery, is generated by the fuel cell. But instead of determining the electric energy generated by the fuel cell such that while the wheelchair is traveling normally, it can be driven by the electric energy generated by the fuel cell alone, the power of the rechargeable battery may be additionally used even during normal travel of the wheelchair. This is because the rechargeable battery is chargeable with the commercial electric power while the wheelchair is not in use.

Further, the electric energy output of the fuel cell preferably has a warmup operation mode until the fuel cell reaches steady operation, and a charge mode of the rechargeable battery by its steady operation (travel driving mode). By performing warmup operation, compared to operation in which the wheelchair is started immediately (steady operational mode used substantially entirely for traveling), it is possible to reduce the burden on the fuel cell and prolong its life span.
The ratio of the output voltage P₁ of the fuel cell during warmup operation to its output voltage P₂ during steady operation is determined e.g. to be P₁ : P₂ = 1 : 2. The output voltage P₂ of the fuel cell during steady operation may be changeable or kept constant.

The rechargeable battery is charged by the fuel cell until the charge rate of the rechargeable battery reaches a required a%. When the required a% is reached, it is possible to deactivate the fuel cell. When the temperature of the fuel cell falls below a predetermined level while the fuel cell is deactivated, the fuel cell may be switched to the warmup operation mode to increase its temperature above the predetermined level. In this case, if the charge rate of the rechargeable battery falls to a predetermined b%, which is lower than the required a%, the fuel cell is preferably activated to charge the rechargeable battery.
If the electric energy generated by the fuel cell is kept constant, its voltage may be kept at such a value that the rechargeable battery is ultimately charged to the charge rate of the required a%.

In any of these embodiments, it is possible to charge the rechargeable battery with the regenerative energy generated while the wheelchair is descending a slope. In this case, as described above, the electric energy generated by the fuel cell may be kept at such a constant level that the rechargeable battery is ultimately charged to the charge rate of the required a%, and when the charge rate of the rechargeable battery exceeds the required a%, the fuel cell may be deactivated while continuing charging of the rechargeable battery with the regenerative energy.

By charging the rechargeable battery, the rechargeable battery degrades. Dumping generated (regenerative) energy is uneconomical. By keeping the voltage of the electric energy generated by the fuel cell to a constant value such that the rechargeable battery is ultimately charged to the required a%, it is possible to prevent excessive power generation. Also, by charging the rechargeable battery not fully (100%) but by several percent less than full charge, it is possible to charge the rechargeable battery with regenerative energy. With this arrangement, because the rechargeable battery is charged by regenerative energy, the regenerative energy can be efficiently used. This improves comprehensive energy efficiency.

The required charge rate of a% is determined according to how the wheelchair is used and the characteristics of the fuel cell and the rechargeable battery. For example, this rate is set at a value between 80% and 95% (not less than 80% and not more than 95%), preferably between 90% and 95%.
When the rechargeable battery is fully (or more than fully) charged, the regenerative energy is directed to the protective resistor and disposed of to prevent overcharge of the rechargeable battery.
The charge rate b% at which charging of the rechargeable battery is restarted is also determined according to how the wheelchair is used and the characteristics of the fuel cell and the rechargeable battery, as with the charge rate a%. For example, it is set at a value between 80% and 90% (<a%), preferably 80 to 85% (<a%).

Under any circumstance, as soon as the excess electric energy generated by the fuel cell becomes unnecessary to charge the rechargeable battery, such excess energy is also directed to the protective resistor and disposed of. Such a protective resistor is provided optionally on e.g. a wheelchair that is frequently used to ascend and descend slopes.
When the electric wheelchair is not used, the fuel cell is preferably forcefully cooled to a predetermined temperature. Preferably, the fuel cell is automatically cooled when the user brings the wheelchair to a stop and turns off the hand-operated switch. By cooling, it is possible to reduce damage to the fuel cell due to heat and thus to prolong the life span of the fuel cell.

Taking into consideration the required charge rate of a% of the rechargeable battery, the electric energy generated by the fuel cell is determined such that while the wheelchair is traveling normally, it can be driven by the energy generated by the fuel cell alone, and the total energy used for one-time travel of the wheelchair can be supplied by the energy generated by the fuel cell, including the energy charged in the rechargeable battery, by actually driving the wheelchair or by experiments.

The rechargeable battery may be any one of known conventional batteries as mentioned above, but is preferably a lithium-ion rechargeable battery.
While lead batteries are widely used because they are inexpensive and resistant to environments in which they are always charged, their weight energy density is especially low, i.e. about half that of nickel rechargeable batteries and about 1/3 that of lithium-ion batteries, so that the weight of a lead battery to be mounted on the wheelchair will be about twice the weight of a nickel battery and about three times the weight of a lithium-ion battery. This makes it difficult to sufficiently reduce the total weight of the electric wheelchair. Also, since the cycle life of such lead batteries are mere several hundred, such rechargeable lead batteries may have to be exchanged several times during the lifetime of the wheelchair, though depending on how the wheelchair is used and use environment.

Nickel batteries such as nickel-cadmium batteries and nickel-hydrogen batteries are popular for small and lightweight use because they are high in energy density compared to lead batteries. But if these batteries are used at high charge rates at all times, their output tends to decrease to half due to the memory effect. The memory effect can be erased and the output can be recovered to a considerable degree by repeating complete discharge several times. But unlike batteries mounted on small portable devices, it is difficult to frequently carry out such complete discharge on the rechargeable battery mounted on the electric wheelchair according to the present invention. Also, at the end of charging of nickel batteries, the batteries produce oxygen gas and heat up. Therefore, when these batteries are charged in an environment where the ambient temperature is nearly 40°C such as in summertime, the internal temperature rises even higher, so that their capacity tends to decrease.

In contrast, lithium-ion rechargeable batteries are high in energy density and charge/discharge energy efficiency, long in the cycle life, and free of the memory effect, so that it is possible to use a small lithium-ion battery as the rechargeable battery of the present invention. Also, it is possible to supply electric power according to load fluctuations depending on the travel conditions of the wheelchair, so that such a battery is most suitable as an auxiliary battery of the fuel cell. Further, since such a battery can be used in a wide temperature range from low to high temperature, the wheelchair on which such a battery is mounted can be used in harsh outdoor environments.

### EMBODIMENT 1

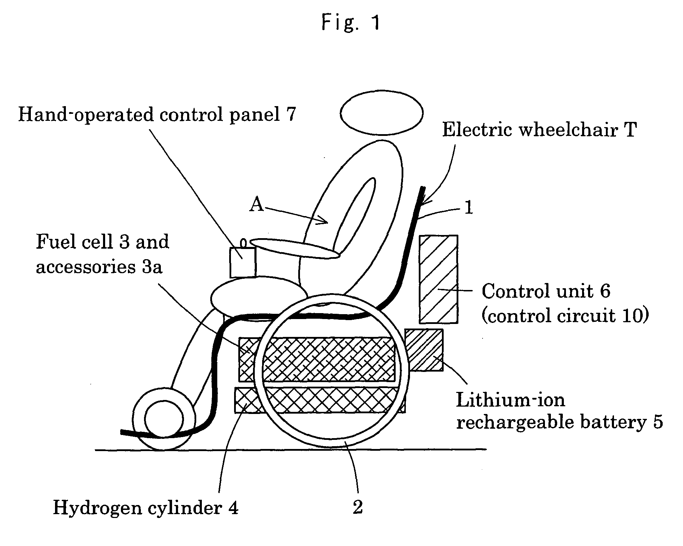

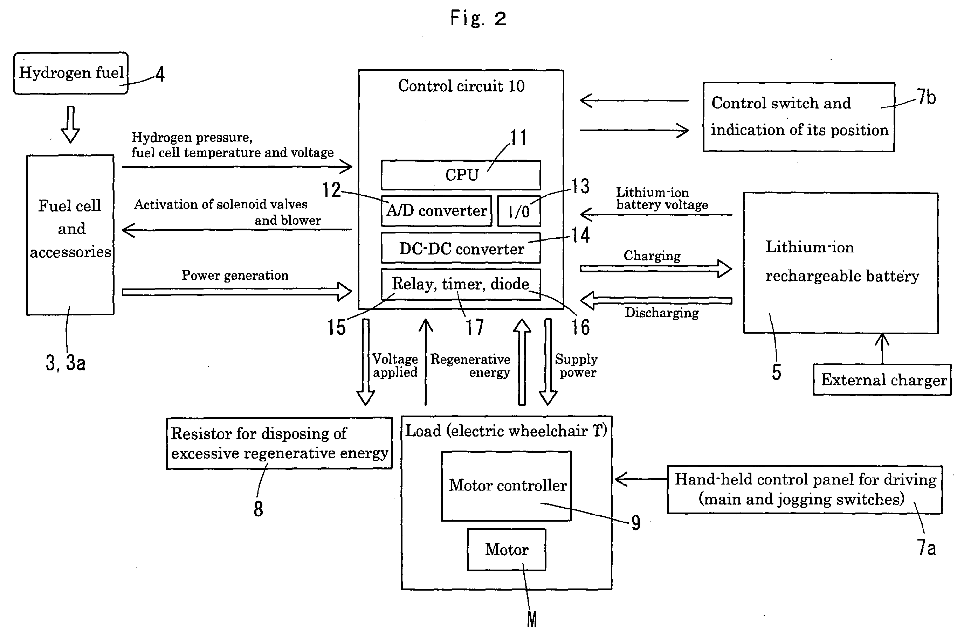

Figs. 1 to 3 show the first embodiment comprising a known electric wheelchair body 1 including a load or electric motor M and its controller 9, and a fuel cell 3, its accessories 3a (such as a humidifier and a blower), a cylinder 4 containing hydrogen fuel and a lithium-ion rechargeable battery 5 that are all located under the seat of the wheelchair body 1 between the large wheels 2 and controlled by a control unit 6 provided behind the backrest of the wheelchair body. The control unit 6 is connected to a control panel 7 provided within the reach of the user, and smoothly controls the fuel cell 3, accessories 3a and rechargeable battery 5 according to the operation of the control panel 7 by the user. The arrangements and sizes (capacities) of the various units shown (including the hydrogen fuel cylinder 4) are not limited to those shown.

The electric wheelchair T of this embodiment includes a hybrid system having an electric circuit including a CPU 11 for controlling the supply of electric power from the fuel cell 3 and the lithium-ion rechargeable battery 5 to the load M. Specifically, the hybrid system keeps the energy generated by the fuel cell 3 to a constant level with high efficiency and maintains the lithium-ion rechargeable battery 5 in a state in which the charging rate is high. For any load fluctuation according to the travel conditions of the wheelchair T, the power supplied from the lithium-ion rechargeable battery 5 is changed to cope with such load fluctuations.

Specifically, the hybrid system of the electric wheelchair T of this embodiment comprises the control panel 7, the load or motor M of the electric wheelchair body 1 and its controller 9, the hydrogen fuel cylinder 4, the fuel cell 3 and its accessories 3a, the lithium-ion rechargeable battery (module) 5, a resistor 8 for disposing of any excess energy produced by regenerative braking, and a control circuit 10 (control unit 6). The parts forming the control unit 6 are mounted on an aluminum substrate for reduced weight.

The control circuit 10 is mounted in the control unit 6 and comprises the CPU 11, an A/D converter 12, I/O ports 35, a DC-DC converter 14, a relay 15 and a backflow prevention diode 16. The control circuit 10 controls the output of the fuel cell 3 and the flow direction of power, using the voltage of the fuel cell 3, the voltage of the lithium-ion rechargeable battery 5, and the voltage applied to the load as control parameters.

The DC-DC converter 14 is of the pressure rise/fall resonance type, and sets the design voltage such that a desirable rated output of the fuel cell 3 and a high charge capacity rate of the lithium-ion rechargeable battery 5 are achieved.
By maintaining the output of the fuel cell 3 at a constant value, it is possible to continuously operate the fuel cell 3 with high efficiency at all times and also to prolong the life of the fuel cell 3.

Any load fluctuation due to acceleration or deceleration in the forward or backward direction, pivoting, or when going up or down a slope is coped with by supplying power from the lithium-ion rechargeable battery 5. The backflow prevention diode 16 prevents the power of the rechargeable battery 5 from being supplied to the fuel cell 3.
The resistor 8 for disposing of any excess energy produced by regenerative braking serves to dispose of any excess energy generated by the fuel cell 3 and/or excess regenerative energy after the lithium-ion rechargeable battery 5 has become fully charged as a result of the wheelchair going down a slope for a long period of time. The control circuit 10 monitors the hydrogen pressure in the fuel cell 3 to detect any insufficient hydrogen energy and monitors the temperature in the fuel cell 3 to determine the necessity to activate a cooling fan.

In this hybrid system, electric energy generated by the fuel cell 3 flows through the DC-DC converter 14 of the pressure rise/fall resonance type so as to be adjusted to a constant output, and is used to charge the lithium-ion rechargeable battery 5 and to activate the load (motor M).

When the lithium-ion rechargeable battery 5 has been charged to the designed charge capacity rate, generation by the fuel cell 3 is temporarily stopped. The designed charge capacity rate is preferably 80 to 95%, more preferably 90 to 95%. If this rate is lower than 80%, the time during which the load can be powered (to move the wheelchair) solely by the lithium-ion rechargeable battery 5 after the fuel cell 3 has run out of fuel is insufficient. If this rate is higher than 95%, when the wheelchair is going down the slope and the regenerative energy is returned to the control circuit 10 from the load, the charge capacity rate of the lithium-ion rechargeable battery 5 tends to exceed 100% in a short period of time.

Also, power discharged from the lithium-ion rechargeable battery 5 is supplied through the control circuit 10 to the load, if the load needs power exceeding the constant output from the fuel cell 3 minus the power consumed by the control circuit 10.
Power is supplied from the battery 5 when it is necessary to supply power to the load higher than the power necessary when the wheelchair travels on a flat surface at a constant speed, such as while the wheelchair is accelerating in the forward direction, pivoting, or ascending a slope.
But for smooth travel of the wheelchair, even while the wheelchair is traveling on a flat surface at a constant speed, electric power may be partially supplied from the rechargeable battery 5 at a rate determined by actually driving the wheelchair or by experiments.

The constant power generated by the fuel cell 3 and not used by the load, minus the power consumed by the control circuit 10 (i.e. excess energy generated by the fuel cell), is supplied through the control circuit 10 to the lithium-ion rechargeable battery 5. For example, such excess energy is produced while the wheelchair T is at a stop or the load is otherwise not activated with the fuel cell 3 activated.

Except while the wheelchair is going down a slope, energy is supplied from the control circuit 10 to the load M to activate the load M.

While e.g. the wheelchair is going down a slope with the load activated, regenerative energy flows from the load M to the control circuit 10. The regenerative energy as well as the constant output from the fuel cell 3 minus the power consumed by the control circuit 10 is supplied to and stored in the lithium-ion rechargeable battery 5.

When e.g. the wheelchair is going down a slope for a long period of time with the load activated, and the charge capacity rate of the lithium-ion rechargeable battery 5 exceeds 100%, excess regenerative energy flows from the control circuit 10 to the resistor 8 and is consumed by the resistor 8. Simultaneously, excess energy generated by the fuel cell 3 also flows to and is consumed by the resistor 8.

By optimally controlling the flow directions of the output of the fuel cell 3 and the electric energy according to the state of the load (travel conditions of the wheelchair T), it is possible to always generate a constant output from the fuel cell 3 with high efficiency and always keep the charge rate of the lithium-ion rechargeable battery 5 at a level not less than 80% so that it is possible to quickly follow any load fluctuation. Regenerative energy can therefore be efficiently stored in the lithium-ion rechargeable battery 5. This in turn makes it possible to operate the wheelchair T for a prolonged period of time without the need for recharging.

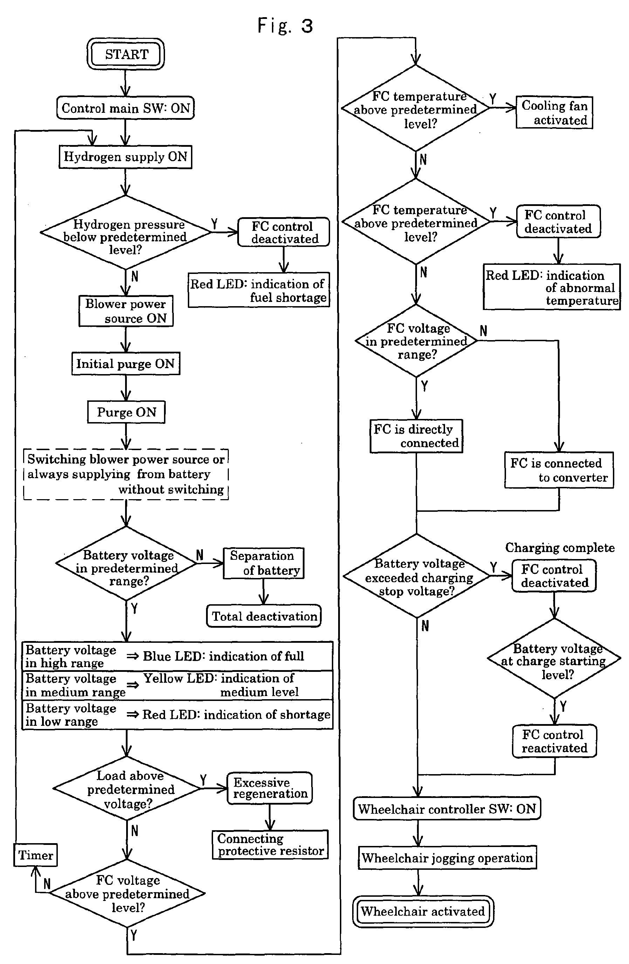

Fig. 3 is a flowchart of various controls performed by the CPU, including supplying hydrogen fuel from the cylinder 4, monitoring the hydrogen pressure, periodically purging hydrogen, indicating the charge level and temporarily deactivating the fuel cell when fully charged, based on monitoring of the blower power source and battery voltage, determining whether excess regenerative energy is produced based on the voltage applied, selectively connecting the converter 14 based on the voltage of the fuel cell, and controlling the cooling fan based on the temperature of the fuel cell. In Fig. 3 as well as Figs. 4 to 7, "Battery" denotes the "rechargeable battery", and "FC" stands for the "fuel cell".

The electric wheelchair T of this embodiment can travel continuously for about 10 hours, and is much lighter in weight than a wheelchair which carries only a rechargeable battery and can travel the same distance as the wheelchair of the embodiment. The hydrogen cylinder 4 as the power source can be easily replaced with a new one too. Even if the fuel cell 3 runs out of fuel, because the charge rate of the rechargeable battery 5 is kept at a high level of 90 to 95%, the wheelchair is able to return to the starting point solely by the energy of the rechargeable battery 5, provided the wheelchair is operated in a normal condition.

### EMBODIMENT 2

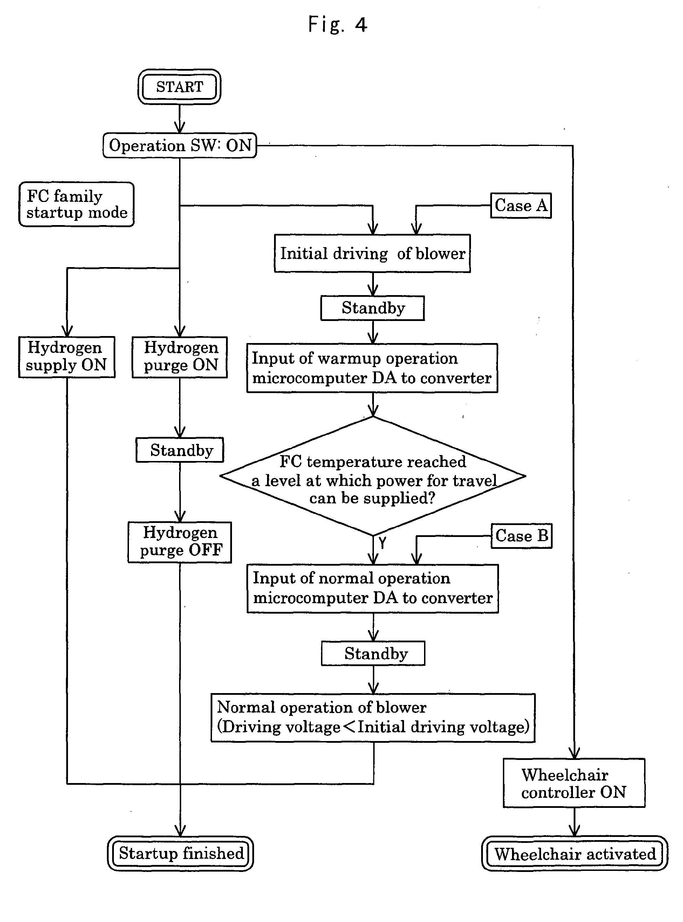

Figs. 4 to 7 show the second embodiment, in which like elements are denoted by like numerals. The wheelchair of this embodiment includes all of the elements of Embodiment 1 and further includes the functions of warming up the fuel cell 5, controlling the temperature range of the fuel cell 5 during travel (operation) of the wheelchair, controlling the temperature of the fuel cell 5 while the wheelchair is at a stop, and stopping the various functions of the wheelchair if any abnormality is detected.

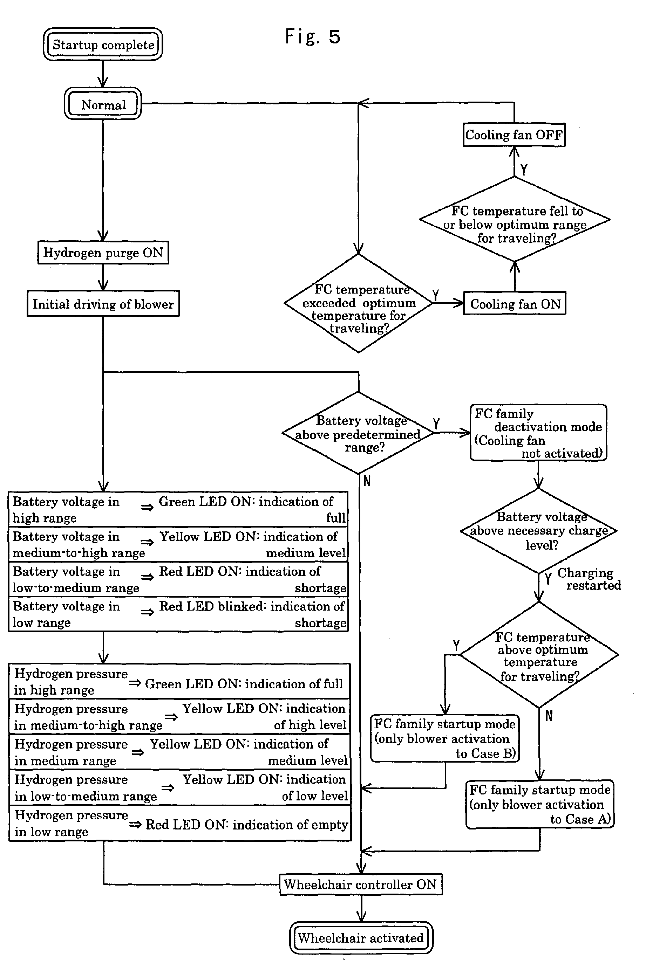

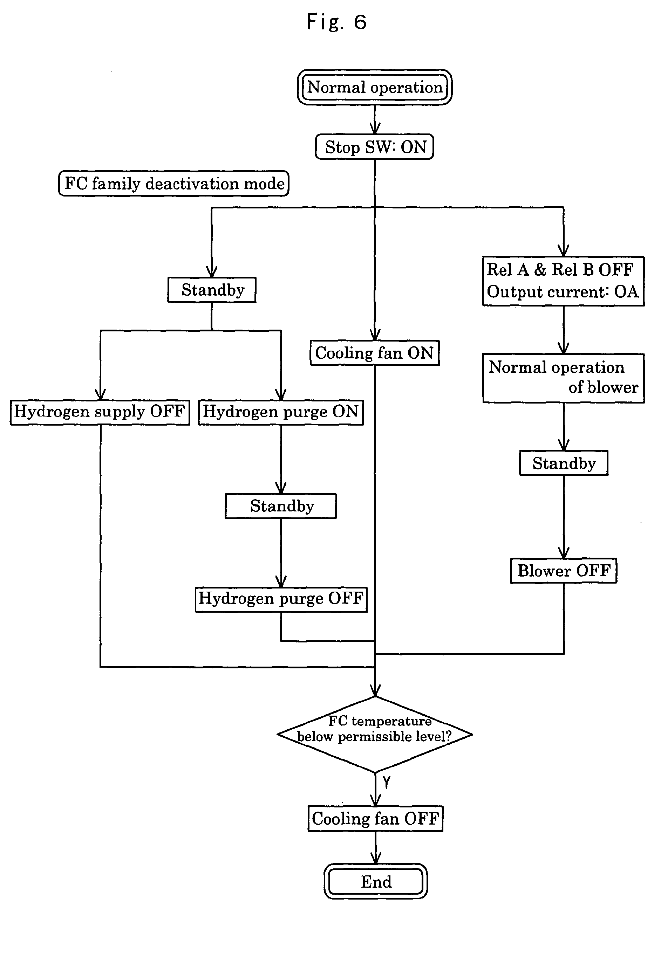

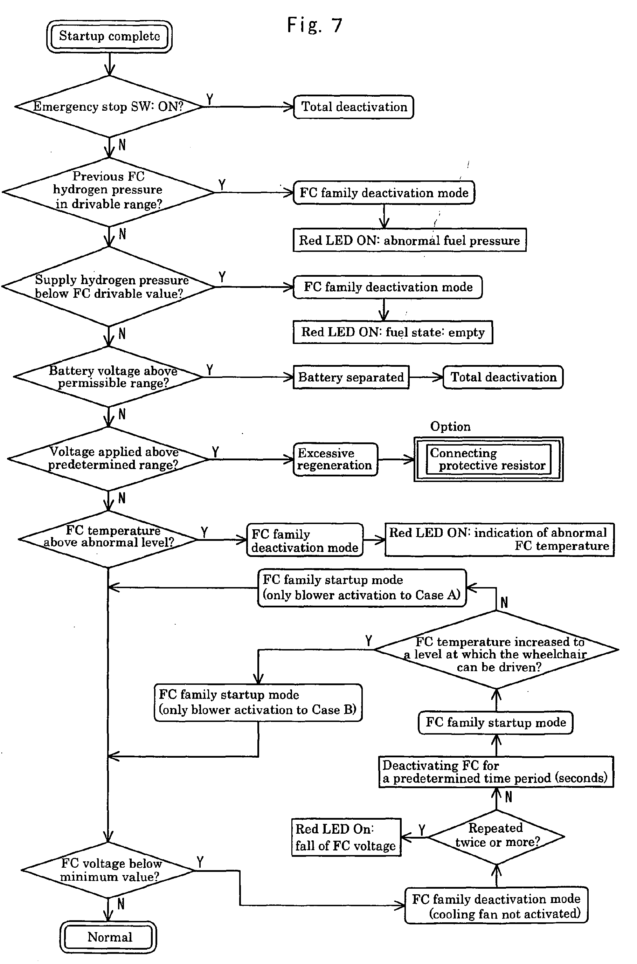

Figs. 4-7 show flowcharts of its control system, of which Fig. 4 is a flowchart at startup, Fig. 5 is one while the wheelchair is traveling normally, Fig. 6 is one while the wheelchair is at a stop, and Fig. 7 is one when abnormality is detected.
In this embodiment, too, the rechargeable battery is charged by the fuel cell 3 to the charge rate a of 95%. When the charge rate reaches 95%, the fuel cell 3 is deactivated. If the temperature of the fuel cell 3 falls below a predetermined value when deactivated, it is warmed up to a temperature higher than the predetermined value. When the charge rate of the rechargeable battery again falls below 80%, which is lower than 95%, the fuel cell 3 is activated to charge the rechargeable battery 5.

Because the wheelchair of either of Embodiments 1 and 2 can travel a longer distance for a longer period of time, the activity range of the user A greatly expands. This means that the user can go to places which were unreachable with conventional wheelchairs, and thus could change even the lifestyle of the user.

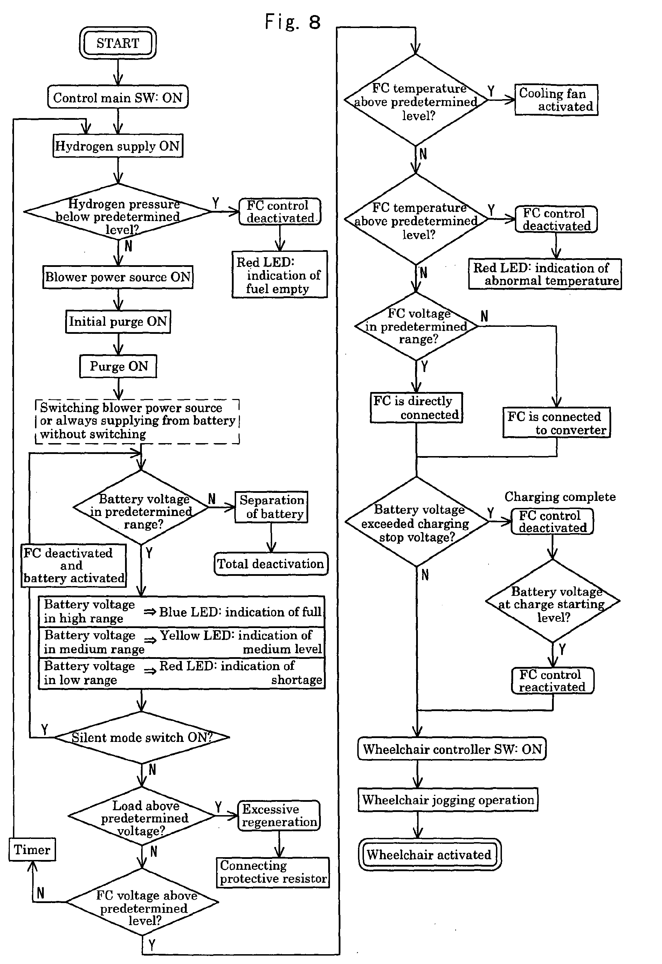

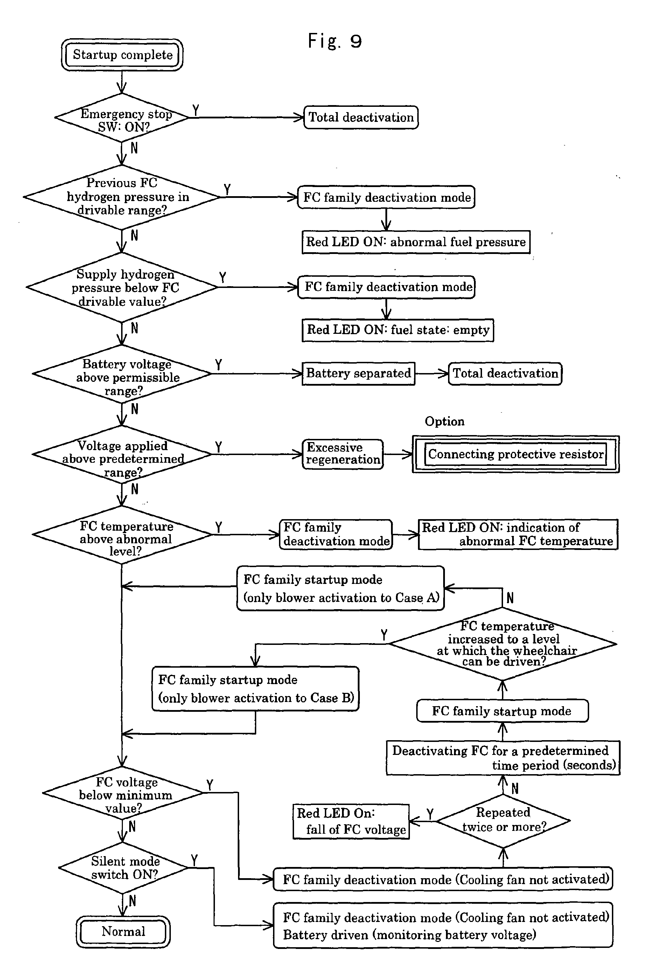

The controller 9 of either embodiment may include a silent switch so that the fuel cell 3 and the accessories 3a can be deactivated by pressing the switch.
By turning on the silent switch, it is possible to silently drive the wheelchair by the rechargeable battery only with the noise-producing accessories deactivated.
When the silent switch is turned off again, the fuel cell 3 and the accessories 3a are reactivated, so that the wheelchair is driven by the fuel cell. The control system is configured to accurately indicate the charge level of the rechargeable battery while the wheelchair is being driven by the rechargeable battery alone, and to reactivate the fuel cell whenever the charge level of the rechargeable battery falls below the necessary minimum level even while the silent switch is turned on. Figs. 8 and 9 show flowcharts of this control system for Embodiments 1 and 2, respectively.

## Claims

1. A hybrid electric wheelchair comprising a motor M for driving the wheelchair T, and a fuel cell and a rechargeable battery, wherein hybrid control is carried out to supply power to said motor M from said fuel cell 3 and rechargeable battery 5 based on fluctuations in the load on the motor corresponding to the travel conditions of the wheel chair T.

2. The electric wheelchair of claim 1 wherein the wheelchair can travel by driving the motor M with said rechargeable battery 5 alone.

3. The electric wheelchair of claim 2 further comprising a switch, wherein the wheelchair can travel by driving the motor M with said rechargeable battery 5 alone by turning on said switch.

4. The electric wheelchair of any of claims 1 to 3 wherein the wheelchair travels by performing hybrid control in which electric energy generated by said fuel cell 3 is kept at a constant value, and electric energy supplied from said rechargeable battery 5 is changed to cope with fluctuations in the load on the motor corresponding to the travel conditions of the wheelchair T.

5. The electric wheelchair of any of claims 1 to 4 wherein in a normal condition, the wheel chair travels by supplying electric energy generated by said fuel cell 3 to said motor M, thereby driving the motor M.

6. The electric wheelchair of any of claims 1 to 5 wherein said fuel cell is warmed up by the electric energy generated by the fuel cell 3 until the fuel cell 3 reaches its steady operational state, and wherein the wheelchair can travel by driving the motor M with said rechargeable battery 5 alone.

7. The electric wheelchair of claim 6 wherein during use of the electric wheelchair, if the temperature of said fuel cell 3 falls below a predetermined value while the fuel cell 3 is deactivated, the fuel cell is warmed up to increase its temperature above the predetermined value.

8. The electric wheelchair of any of claims 1 to 7 wherein said rechargeable battery 5 is charged by an excess energy generated by said fuel cell 3.

9. The electric wheelchair of any of claims 1 to 8 wherein said rechargeable battery 5 is charged by said fuel cell 3 until the charge rate of the rechargeable battery 5 reaches a predetermined a%, and wherein when the predetermined a% is reached, said fuel cell 3 is deactivated.

10. The electric wheelchair of claim 9 wherein said fuel cell 3 is activated when the charge rate of said rechargeable battery 5 falls below a predetermined b%, which is lower than said predetermined a%, to charge the rechargeable battery 5.

11. The electric wheelchair of claim 9 or 10 wherein the electric energy generated by said fuel cell 3 is kept at such a constant value that said rechargeable battery 5 is ultimately charged to a charge rate of said predetermined a%.

12. The electric wheelchair of any of claims 1 to 11 wherein said rechargeable battery 5 is charged by regenerative energy while the wheelchair is descending a slope.

13. The electric wheelchair of claim 12 referring to any of claims 9 to 11 wherein said rechargeable battery is charged by the regenerative energy to a charge rate within a range of between said predetermined a% and the fully charged state of 100%, and wherein if the charge rate of said rechargeable battery exceeds the charge rate of 100%, said regenerative energy is disposed of by a protecting resistor 8.

14. The electric wheelchair of any of claims 1 to 13 wherein when use of the wheelchair is stopped, said fuel cell 3 is forcefully cooled to a predetermined temperature.
